# EUROPÄISCHE PATENTSCHRIFT

(11) **EP 1 306 268 B1**
(45) Veröffentlichungstag und Bekanntmachung des Hinweises auf die Patenterteilung: **01.03.2006**
(21) Anmeldenummer: 02023429.0
(22) Anmeldetag: 19.10.2002
(51) Int. Cl.: B60R 13/04

(54) **Dichtungsband mit Dichtungsfuss**
Sealing strip with sealing foot
Bande d'étanchéité avec joint d'étainchéité à pied

(30) Priorität: 27.10.2001 DE 10153135
(43) Veröffentlichungstag der Anmeldung: 02.05.2003
(73) Patentinhaber: Bayerische Motoren Werke Aktiengesellschaft, 80809 München (DE)
(72) Erfinder: Macha, Ulrich, 85435 Erding (DE)

(56) Entgegenhaltungen:
- PATENT ABSTRACTS OF JAPAN vol. 1998, no. 08, 30. Juni 1998 (1998-06-30) -& JP 10 076886 A (SUZUKI MOTOR CORP), 24. März 1998 (1998-03-24)
- PATENT ABSTRACTS OF JAPAN vol. 1999, no. 11, 30. September 1999 (1999-09-30) -& JP 11 165596 A (TOYODA GOSEI CO LTD), 22. Juni 1999 (1999-06-22)
- PATENT ABSTRACTS OF JAPAN vol. 2000, no. 01, 31. Januar 2000 (2000-01-31) -& JP 11 291836 A (KATAYAMA KOGYO KK;HONDA MOTOR CO LTD), 26. Oktober 1999 (1999-10-26)
- PATENT ABSTRACTS OF JAPAN vol. 1998, no. 09, 31. Juli 1998 (1998-07-31) -& JP 10 109600 A (TOYOTA MOTOR CORP;CENTRAL MOTOR CO LTD), 28. April 1998 (1998-04-28)
- PATENT ABSTRACTS OF JAPAN vol. 2002, no. 04, 4. August 2002 (2002-08-04) -& JP 2001 354078 A (SHIROKI CORP), 25. Dezember 2001 (2001-12-25)
- PATENT ABSTRACTS OF JAPAN vol. 2000, no. 24, 11. Mai 2001 (2001-05-11) -& JP 2001 199286 A (INOAC CORP), 24. Juli 2001 (2001-07-24)

## Beschreibung

Die Erfindung betrifft ein Dichtungsband mit Dichtungsfuß zum Einstecken in einen U-förmigen Kanal gemäß des Oberbegriffs des Patentanspruchs 1.

Aus der JP 10 076886 A und aus der JP 11 165596 A ist jeweils ein Dichtungsband zum Einstecken in einen U-förmigen Kanal bekannt. Am unteren Ende des Dichtungsbands befindet sich beidseitig je eine elastische Lippe, mit denen das Dichtungsband mittig im U-förmigen Kanal gehalten ist.

Allgemein bekannt sind Dichtungsbänder mit einem Dichtungsfuß, der in einen U-förmigen Kanal gesteckt werden kann. Der U-förmige Kanal kann - im Querschnitt gesehen - an den freien Enden der Seiten auf der Innenseite jeweils einen Vorsprung aufweisen. Damit der Dichtungsfuß möglichst gut in dem U-förmigen Kanal gehalten wird, weist er an seinem freien unteren Ende beidseitig je eine elastische Verrastungslippe auf, die im eingebauten Zustand im Kanal die Vorsprünge hintergreift. Nachteiligerweise führen Toleranzen des Dichtungsbandes und / oder des Kanals immer wieder zu einer erschwerten Montage oder zu einer ungenügenden Hinterrastung der Verrastungslippen an den Vorsprüngen.

Aufgabe der Erfindung ist es, das bekannte Dichtungsband mit Dichtungsfuß zum Einstecken in einen U-förmigen Kanal so weiterzubilden, dass es auch bei auftretenden Toleranzen leicht montierbar ist und dennoch einen festen Sitz im Kanal gewährleistet.

Diese Aufgabe wird durch ein Dichtungsband mit den Merkmalen des Patentanspruchs 1 gelöst.

Gemäß Patentanspruch 1 ist oberhalb der beiden Verrastungslippen im Querschnitt gesehen beidseitig zumindest jeweils eine seitliche Führungslippe am Dichtungsfuß angebracht. An den freien Enden der Seiten des U-förmigen Kanals befindet sich im Querschnitt gesehen innen jeweils ein Vorsprung, wobei die beiden elastischen Verrastungslippen im eingebauten Zustand im Kanal die Vorsprünge hintergreifen, und die beiden Verrastungelippen sich im eingebauten Zustand an die Vorsprünge anlehnen. Die seitlichen Führungslippen stellen bei der Montage eine mittige Einführung des Dichtungsfußes in den Kanal sicher. Auf diese Weise wird beispielsweise ein für die Hinterrastung der Verrastungstippen kritisches Verkippen des Dichtungsfußes verhindert. Außerdem kompensieren die seitlichen Führungslippen Breitentoleranzen des Dichtungsbandes und / oder des Kanals.

Vorteilhafterweise ist oberhalb der beiden Verrastungslippen beidseitig eine Gegenkraftlippe am Dichtungsfuß oder am Dichtungsband angebracht, die von außen auf den Kanal drückt, wenn das Dichtungsband im Kanal eingesteckt ist. Diese Gegenkraftlippen bringen dann eine Gegenkraft zu den Verrastungslippen auf. Zusammen mit den Verrastungslippen stellen sie ein federndes Element dar. Dadurch wird der Dichtungsfuß in der Höhe schwimmend gelagert. Auf diese Weise lassen sich die Höhentoleranzen des Dichtungsbands und des Kanals kompensieren.

Durch die Kompensation der Toleranzen mit Gegenkraftlippen und / oder seitlichen Führungslippen verbessert sich die Funktion und die Optik des eingebauten Dichtungsbands. Das Dichtungsband ist leicht montierbar und sitzt trotzdem fest im Kanal. Es sind während der Entwicklung des Dichtungsbandes weniger Optimierungsschleifen erforderlich. Sowohl das Dichtungsband als auch der Kanal können nun relativ große Toleranzen aufweisen, ohne dass es zu Funktionseinschränkungen kommt. Die Herstellkosten dieser Bauteile reduziert sich so, da ein geringerer Ausschuss anfällt.

Das Dichtungsband besteht günstigerweise aus EPDM. EPDM ist ein gängiger, preiswerter Werkstoff, aus dem Dichtungsbänder problemlos extrudiert werden können. Die dafür erforderlichen Werkzeugkosten sind gering.

Die Verrastungslippen und / oder die Gegenkraftlippen und / oder die seitlichen Führungslippen können sich vorteilhafterweise nicht nur über die ganze Länge des Dichtungsbands erstrecken, sondern sich auch nur an bestimmten Bereichen des Dichtungsbands befinden. Dadurch sind engere Verlegeradien des Dichtungsbandes möglich. Die Verrastungs-, Gegenkraft- und seitlichen Führungslippen erschweren eine Verlegung der Dichtung in kleinen Radien. Um das Dichtungsband dennoch in solch engen Radien verlegen zu können, kann das Dichtungsband beispielsweise im Radiusbereich keine Verrastungslippen und / oder Gegenkraftlippen und / oder seitliche Führungslippen aufweisen. Zur sicheren Befestigung ist es ausreichend, wenn das Dichtungsband in den an den Radiusbereich angrenzenden Bereichen sicher gehalten ist. In einer Weiterbildung sind die Verrastungslippen und / oder Gegenkraftlippen und / oder seitlichen Führungslippen als Nasen ohne nennenswerte Längserstreckung ausgeführt. Mehrere derartige Befestigungspunkte sind zur Befestigung ebenfalls ausreichend und ermöglichen so eine sehr freie Verlegung des Dichtungsbandes.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig. 1**: einen Schnitt durch ein aus dem Stand der Technik bekanntes Dichtungsband, das in einen Kanal eingesteckt ist und
- **Fig. 2**: einen Schnitt durch ein erfindungsgemäßes Dichtungsband, das in einen Kanal eingesteckt ist.

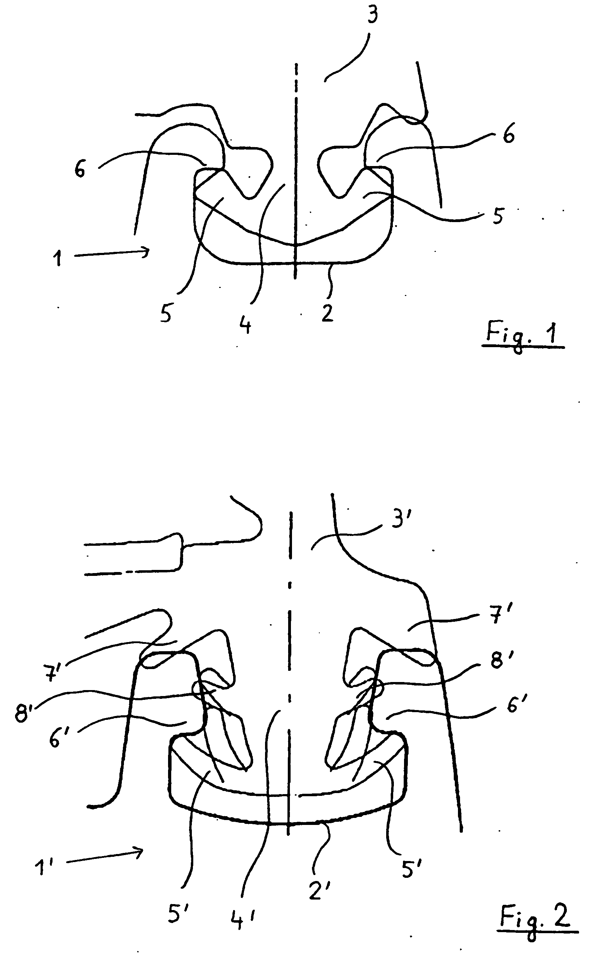

In Fig. 1 ist im Querschnitt eine Stoßleiste 1 an einem Personenkraftwagen gezeigt, die einen U-förmigen Kanal 2 aufweist. In den U-förmigen Kanal 2 ist ein aus dem Stand der Technik bekanntes Dichtungsband 3 mit einem Dichtungsfuß 4 eingesteckt. An dem unteren Ende des Dichtungsfußes 4 ist beidseitig je eine Verrastungslippe 5 angebracht. Diese Verrastungslippen 5 sind im Kanal 2 an Vorsprüngen 6 verhakt, die auf der Innenseite der freien Enden der Seiten des Kanals 2 angebracht sind. Dadurch wird das Dichtungsband 3 sicher im Kanal 2 gehalten.

Diese bekannte Anordnung ist allerdings sehr toleranzanfällig. Bereits bei geringen Maßabweichungen des Dichtungsbands 3 und / oder des Kanals 2 ist die Montage nur sehr mühsam möglich, und das Dichtungsband 3 sieht optisch unsauber verlegt aus. Diese Probleme treten bei dem Dichtungsband 3', wie es in Fig. 2 gezeigt ist, nicht auf:

Das Dichtungsband 3' ist ebenfalls in einen U-förmigen Kanal 2' einer Stoßleiste 1' eines Personenkraftwagens mit einem Dichtungsfuß 4' eingesteckt. An dem unteren Ende des Dichtungsfußes 4' ist beidseitig je eine Verrastungslippe 5' angebracht. Diese Verrastungslippen 5' verhaken sich im Kanal 2' an Vorsprüngen 6', die auf der Innenseite der freien Enden der Seiten des Kanals 2' angebracht sind. Am oberen Ende des Dichtungsfußes 4' ist beidseitig je eine Gegenkraftlippe 7' angebracht. Diese Gegenkraftlippen 7' drücken von außen auf den Kanal 2'. Sie bringen eine Gegenkraft zu den Verrastungslippen 5' auf. Zusammen mit den Verrastungslippen 5' stellen sie ein federndes Element dar. Dadurch wird der Dichtungsfuß 4' in der Höhe schwimmend gelagert. Auf diese Weise lassen sich die Höhentoleranzen des Dichtungsbands 3' und des Kanals 2' kompensieren.

Zwischen den Verrastungslippen 5' und den Gegenkraftlippen 7' ist beidseitig am Dichtungsfuß 4' je eine seitliche Führungslippe 8' angebracht. Diese seitlichen Führungslippen 8' führen den Dichtungsfuß 4' bei der Montage mittig in den Kanal 2' ein. Auf diese Weise wird beispielsweise ein für die Hinterrastung der Verrastungslippen 5' kritisches Verkippen des Dichtungsfußes 4' bei der Montage verhindert. Außerdem kompensieren die seitlichen Führungslippen 8' Breitentoleranzen des Dichtungsbandes 3' und / oder des Kanals 2'.

## Patentansprüche

1. Dichtungsband (3') mit Dichtungsfuß (4') zum Einstecken in einen U-förmigen Kanal (2'), wobei der Dichtungsfuß (4') am unteren Ende beidseitig je eine elastische Verrastungslippe (5') aufweist, und wobei oberhalb der beiden Verrastungslippen (5') beidseitig zumindest jeweils eine seitliche Führungslippe (8') am Dichtungsfuß (4') angebracht ist, **dadurch gekennzeichnet, dass** an den freien Enden der Seiten des U-förmigen Kanals (2') im Querschnitt gesehen sich innen jeweils ein Vorsprung (6') befindet, wobei die beiden elastischen Verrastungslippen (5') im eingebauten Zustand im Kanal (2') die Vorsprünge (6') hintergreifen, und die beiden Verrastungslippen (5') sich im eingebauten Zustand an die Vorsprünge (6') anlehnen.

2. Dichtungsband (3') nach Anspruch 1, **dadurch gekennzeichnet, dass** oberhalb der beiden Verrastungslippen (5') beidseitig eine Gegenkraftlippe (7') am Dichtungs-fuß (4') oder am Dichtungsband (3') angebracht ist, die im eingebauten Zustand von außen auf den Kanal (2') drückt.

3. Dichtungsband (3') nach Anspruch 1 oder 2, **dadurch gekennzeichnet, dass** das Dichtungsband (2') aus EPDM besteht.

4. Dichtungsband (3') nach mindestens einem der vorhergehenden Ansprüche, **dadurch gekennzeichnet, dass** die Verrastungslippen (5') und / oder die Gegenkraftlippen (7') und / oder die seitlichen Führungslippen (8') sich nicht über die ganze Länge des Dichtungsbands (2') erstrecken, sondern sich nur an bestimmten Bereichen des Dichtungsbands (2') befinden.

5. Dichtungsband (3') nach Anspruch 4, **dadurch gekennzeichnet, dass** die Verrastungslippen (5') und / oder die Gegenkraftlippen (7') und / oder die seitlichen Führungslippen (8') als Nasen ohne nennenswerte Längserstreckung ausgeführt sind.

6. Dichtungsband (3') nach mindestens einem der vorhergehenden Ansprüche, **dadurch gekennzeichnet, dass** das Dichtungsband (2') für eine Anwendung an einem Kraftfahrzeug konzipiert ist.

## Claims

1. A sealing strip (3') comprising a foot (4') for inserting into a U-shaped channel (2'), wherein the sealing foot (4') has an elastic locating lip (5') on each side of the bottom end and wherein at least one lateral guide lip (8') is disposed on the sealing foot (4') on each side above the two locating lips (5'), **characterised in that** an inner projection (6') is formed on the free end of each side of the U-shaped channel (2'), seen in cross-section, wherein the two elastic locating lips (5') engage behind the projections (6') when installed in the channel (2') and the two locating lips (5') abut the projections (6') when installed.

2. A sealing strip (3') according to claim 1, **characterised in that** a counter-force lip (7') is formed on the sealing foot (4') or on the sealing strip (3') on each side above the two locating lips (5') and when installed presses from the exterior against the channel (2').

3. A sealing strip (3') according to claim 1 or claim 2, **characterised in that** the sealing strip (2') is made of EPDM.

4. A sealing strip (3') according to at least one of the preceding claims, **characterised in that** the locating lips (5') and/or the counter-force lips (7') and/or the lateral guide lips (8') do not extend over the entire length of the sealing strip (2') but are only on certain regions of the sealing strip (2').

5. A sealing strip (3') according to claim 4, **characterised in that** the locating lips (5') and/or the counter-force lips (7') and/or the lateral guide lips (8') are lugs without appreciable lengthwise extension.

6. A sealing strip (3') according to at least one of the preceding claims, **characterised in that** the sealing strip (2') is designed for use on a motor vehicle.

## Revendications

1. Bande d'étanchéité (3') avec pied de joint (4') pour insertion dans un canal (2) en forme de U, le pied de joint (4') présentant sur l'extrémité inférieure de part et d'autre respectivement une lèvre d'arrêt (5') élastique, et avec respectivement une lèvres de guidage latéral (8') placée au-dessus des deux lèvres d'arrêt (5') de part et d'autre au moins sur le pied de joint (4'),
**caractérisée en ce que**
respectivement une saillie (6') est prévue sur les extrémités libres des parois du canal (2) en forme de U, en coupe transversale à l'intérieur, et à l'état monté dans le canal (2') les deux lèvres d'arrêt (5') élastiques s'engagent derrière les saillies (6'), et les deux lèvres d'arrêt (4'), à l'état monté, s'appuient contre les saillies (6').

2. Bande d'étanchéité (3') selon la revendication 1,
**caractérisée en ce qu'**
une lèvre à force antagoniste (7') est placée au-dessus des deux lèvres d'arrêt (5') de part et d'autre sur le pied de joint (4') ou la bande d'étanchéité (3'), et à l'état monté, appuie de l'extérieur sur le canal (2').

3. Bande d'étanchéité (3') selon la figure 1 ou 2,
**caractérisée en ce que**
la bande d'étanchéité est en EPDM.

4. Bande d'étanchéité (3') selon au moins l'une quelconque des revendications précédentes,
**caractérisée en ce que**
les lèvres d'arrêt (5') et/ou les lèvres à force antagoniste (7') et/ou les lèvres de guidage latéral (8') ne s'étendent pas sur toute la longueur de la bande d'étanchéité (3') mais ne se trouvent que sur des zones déterminées de la bande d'étanchéité (3').

5. Bande d'étanchéité (3') selon la revendication 4,
**caractérisée en ce que**
les lèvres d'arrêt (5') et/ou les lèvres à force antagoniste (7') et/ou les lèvres de guidage latéral (8') présentent la forme de nez sans étendue en longueur significative.

6. Bande d'étanchéité (3') selon au moins l'une des revendications précédentes,
**caractérisée en ce que**
la bande d'étanchéité (3) est conçue pour une utilisation sur un véhicule automobile.
